# EUROPEAN PATENT APPLICATION

(11) **EP 4 706 437 A1**
(43) Date of publication of application: **11.03.2026**
(21) Application number: 25200070.8
(22) Date of filing: 04.09.2025
(51) Int. Cl.: A42B 3/04

(54) **SMART HELMET SYSTEM, HELMET, AND TRANSPORTATION VEHICLE**

(30) Priority: 05.09.2024 CN 202411244144; 09.10.2024 CN 202422436241 U
(71) Applicant: 3KM Pte. Ltd, Singapore 199591 (SG)
(72) Inventor: WANG, Xiajun, 199591 SINGAPORE (SG); SHI, Yi, 199591 SINGAPORE (SG)
(74) Representative: Santarelli

(57) **Abstract**

The present application provides a smart helmet system, a helmet, and a transportation vehicle. The smart helmet system includes a helmet body, a first detection module, a second detection module, and a third detection module. The helmet body includes a first lock part of a helmet lock and retention straps; the retention straps include a helmet buckle; and a second lock part of the helmet lock is mounted on the transportation vehicle. The first detection module is configured to detect, when working, a connection state between the first lock part and the second lock part and send information of the connection state to a control module. The second detection module is configured to detect a wearing state of the helmet and send information of the wearing state to the control module. The third detection module is configured to detect an engagement state of the helmet buckle and send information of the engagement state to the control module. The control module is configured to determine the wearing/return state of the helmet based on the information of the connection state, the information of the wearing state, and the information of the engagement state.

## Description

### Technical Field

The present application relates to the technical field of helmets, and in particular, to a smart helmet system, a helmet, and a transportation vehicle.

### Background of the Invention

For a person riding a transportation vehicle (such as a motorbike, a bicycle, an electric bicycle, or an electric scooter), a helmet is a critical equipment for ensuring safety. Wearing a helmet correctly can significantly reduce the risks of head injuries and effectively protect the head from serious injuries in traffic accidents.

When using transportation vehicles, riders may not wear helmets correctly as required by regulations.. For example, riders may hang the helmet on the vehicle only to pass police inspections; or, although wearing the helmet, they might not fasten the strap securely, making it easy for the helmet to fall off in an emergency, thus failing to provide the necessary protection. These improper helmet-wearing practices significantly increase the risk of head injury in the event of an accident.

### Summary of the Invention

The present application provides a smart helmet system, a helmet, and a transportation vehicle. Whether a rider safely wears or returns a helmet is detected by a first detection module, a second detection module, and a third detection module, ensuring that the rider wears the helmet on the head correctly.

To achieve the above object, the present application provides the following technical solutions:
In a first aspect, embodiments of the present application provides a smart helmet system, configured to detect a wearing/return state of a helmet and including: a control module; a helmet body including a first lock part of a helmet lock and retention straps, where the retention straps include a helmet buckle; and a second lock part of the helmet lock is mounted on a transportation vehicle; a first detection module in communication connection with the control module and configured to detect, when working, a connection state between the first lock part and the second lock part and send information of the connection state to the control module; a second detection module in communication connection with the control module and configured to detect a wearing state of the helmet and send information of the wearing state to the control module; and a third detection module in communication connection with the control module and configured to detect an engagement state of the helmet buckle and send information of the engagement state to the control module, where the control module is configured to determine the wearing/return state of the helmet based on the information of the connection state, the information of the wearing state, and the information of the engagement state.

According to some embodiments of the present application, the first detection module includes a first sensor and a first communication unit; the first communication unit is in communication connection with the first sensor and in communication connection with the control module by a meter-scale wireless data transmission technology; the first sensor is located on the first lock part or the second lock part and configured to sense, when working, whether the first lock part is engaged with the second lock part; and in order to send the information of the connection state to the control module, the first communication unit is configured to: when the first lock part is engaged with the second lock part, send a helmet-locked signal; otherwise, send a helmet-unlocked signal; or when the first lock part is engaged with the second lock part, send a null signal as the helmet-locked signal; otherwise, send the helmet-unlocked signal; or when the first lock part is engaged with the second lock part, send the helmet-locked signal; otherwise, send the null signal as the helmet-unlocked signal.

According to some embodiments of the present application, the first lock part includes a clamping slot and the second lock part includes a spring clamping point; and when the first lock part is engaged with the second lock part, the spring clamping point is clamped into the clamping slot.

According to some embodiments of the present application, the first sensor includes: a target tag located on one of the first lock part and the second lock part; and a reader located on the other one of the first lock part and the second lock part and configured to identify the target tag to sense whether the first lock part is engaged with the second lock part.

According to some embodiments of the present application, the reader is capable of identifying any one tag in a specified tag set; the specified tag set includes a plurality of specified tags matching the reader; and the plurality of specified tags include the target tag.

According to some embodiments of the present application, the second detection module is located on an inner side of the helmet body and includes: a pressure sensor configured to detect, when working, a pressure exerted on the inner side when a rider wears the helmet; and a second communication unit in communication connection with the control module by the meter-scale wireless data transmission technology and in communication connection with the pressure sensor; and in order to send the information of the wearing state to the control module, the second communication unit is configured to: when the pressure sensor detects that the pressure exerted on the inner side is greater than or equal to a preset pressure, send a helmet-worn signal; otherwise, send a helmet-taken-off signal; or when the pressure sensor detects that the pressure exerted on the inner side is greater than or equal to the preset pressure, send a null signal as the helmet-worn signal; otherwise, send the helmet-taken-off signal; or when the pressure sensor detects that the pressure exerted on the inner side is greater than or equal to the preset pressure, send the helmet-worn signal; otherwise, send the null signal as the helmet-taken-off signal.

According to some embodiments of the present application, the helmet buckle includes a first buckle part and a second buckle part; the third detection module includes: a third sensor including a signal unit and a sensing unit, where the signal unit is located on the first buckle part and the sensing unit is located on the second buckle part; and when the signal unit enters a sensing region of the sensing unit, the signal unit is sensed by the sensing unit such that the third sensor senses that the helmet buckle is engaged; and a third communication unit in communication connection with the control module by the meter-scale wireless data transmission technology and in communication connection with the third sensor; and in order to send the information of the engagement state to the control module, the third communication unit is configured to: when the sensing unit detects that the signal unit enters the sensing region, send a helmet-buckle-engaged signal; otherwise, send a helmet-buckle-disengaged signal; or when the sensing unit detects that the signal unit enters the sensing region, send a null signal as the helmet-buckle-engaged signal; otherwise, send the helmet-buckle-disengaged signal; or when the sensing unit detects that the signal unit enters the sensing region, send the helmet-buckle-engaged signal; otherwise, send the null signal as the helmet-buckle-disengaged signal.

According to some embodiments of the present application, the third sensor is a hall sensor; the signal unit is a magnet; the sensing unit is a magnetic induction element; and the third communication unit is in communication connection with the magnetic induction element and configured to send, when working, the helmet-buckle-engaged signal and/or the helmet-buckle-disengaged signal.

According to some embodiments of the present application, the control module is located on the helmet and/or the transportation vehicle; and in order to determine a safe wearing state of the helmet based on the information of the connection state, the information of the wearing state, and the information of the engagement state, the control module is configured to: send target information that the helmet is worn safely to the transportation vehicle after receiving the helmet-unlocked signal, the helmet-worn signal, and the helmet-buckle-engaged signal.

According to some embodiments of the present application, in order to determine the safe wearing state of the helmet based on the information of the connection state, the information of the wearing state, and the information of the engagement state, the control module is configured to: send information that the helmet is worn safely to the transportation vehicle after sequentially receiving the helmet-unlocked signal, the helmet-worn signal, and the helmet-buckle-engaged signal.

According to some embodiments of the present application, the control module is located on the helmet and/or the transportation vehicle; and in order to determine the return state of the helmet based on the information of the connection state, the information of the wearing state, and the information of the engagement state, the control module is configured to: send information that the helmet is returned safely to the transportation vehicle after receiving the helmet-locked signal, the helmet-taken-off signal, and the helmet-buckle-disengaged signal.

According to some embodiments of the present application, in order to determine the return state of the helmet based on the information of the connection state, the information of the wearing state, and the information of the engagement state, the control module is configured to: send the information that the helmet is returned safely to the transportation vehicle after sequentially receiving the helmet-buckle-disengaged signal, the helmet-taken-off signal, and the helmet-locked signal.

In a second aspect, embodiments of the present application provides a helmet, including: a body including a first lock part of a helmet lock and retention straps, where the retention straps include a helmet buckle; and a second lock part of the helmet lock is mounted on a transportation vehicle; a first detection module in communication connection with a control module and configured to detect, when working, a connection state between the first lock part and the second lock part and send information of the connection state to the control module; a second detection module in communication connection with the control module and configured to detect a wearing state of the helmet and send information of the wearing state to the control module; and a third detection module in communication connection with the control module and configured to detect an engagement state of the helmet buckle and send information of the engagement state to the control module, where the control module is configured to determine a wearing/return state of the helmet based on the information of the connection state, the information of the wearing state, and the information of the engagement state.

According to some embodiments of the present application, the first detection module includes a first sensor and a first communication unit; the first communication unit is in communication connection with the control module by a meter-scale wireless data transmission technology and in communication connection with the first sensor; the first sensor is located on the first lock part or the second lock part and configured to sense, when working, whether the first lock part is engaged with the second lock part; and in order to send the information of the connection state to the control module, the first communication unit is configured to: when the first lock part is engaged with the second lock part, send a helmet-locked signal; otherwise, send a helmet-unlocked signal; or when the first lock part is engaged with the second lock part, send a null signal as the helmet-locked signal; otherwise, send the helmet-unlocked signal; or when the first lock part is engaged with the second lock part, send the helmet-locked signal; otherwise, send the null signal as the helmet-unlocked signal.

According to some embodiments of the present application, the second detection module is located on an inner side of the body and includes: a pressure sensor configured to detect, when working, a pressure exerted on the inner side when a rider wears the helmet; and a second communication unit in communication connection with the control module by the meter-scale wireless data transmission technology and in communication connection with the pressure sensor; and in order to send the information of the wearing state to the control module, the second communication unit is configured to: when the pressure sensor detects that the pressure exerted on the inner side is greater than or equal to a preset pressure, send a helmet-worn signal; otherwise, send a helmet-taken-off signal; or when the pressure sensor detects that the pressure exerted on the inner side is greater than or equal to the preset pressure, send a null signal as the helmet-worn signal; otherwise, send the helmet-taken-off signal; or when the pressure sensor detects that the pressure exerted on the inner side is greater than or equal to the preset pressure, send the helmet-worn signal; otherwise, send the null signal as the helmet-taken-off signal.

According to some embodiments of the present application, the helmet buckle includes a first buckle part and a second buckle part; the third detection module includes: a third sensor including a signal unit and a sensing unit, where the signal unit is located on the first buckle part and the sensing unit is located on the second buckle part; and when the signal unit enters a sensing region of the sensing unit, the signal unit is sensed by the sensing unit such that the third sensor senses that the helmet buckle is engaged; and a third communication unit in communication connection with the control module by the meter-scale wireless data transmission technology and in communication connection with the third sensor; and in order to send the information of the engagement state to the control module, the third communication unit is configured to: when the sensing unit detects that the signal unit enters the sensing region, send a helmet-buckle-engaged signal; otherwise, send a helmet-buckle-disengaged signal; or when the sensing unit detects that the signal unit enters the sensing region, send a null signal as the helmet-buckle-engaged signal; otherwise, send the helmet-buckle-disengaged signal; or when the sensing unit detects that the signal unit enters the sensing region, send the helmet-buckle-engaged signal; otherwise, send the null signal as the helmet-buckle-disengaged signal.

In a third aspect, embodiments of the present application provides a transportation vehicle, including: a vehicle frame; a front wheel assembly rotatably connected with the vehicle frame; a rear wheel assembly rotatably connected with the vehicle frame; a smart helmet system including the above-described smart helmet system; and a central control system mounted on the vehicle frame and in communication connection with the smart helmet system.

According to some embodiments of the present application, the rear wheel assembly includes at least one rear wheel; and the front wheel assembly includes: a handle bar; a fork pivotally connected with the handle bar; and at least one front wheel rotatably connected with the fork.

According to some embodiments of the present application, the central control system is configured to: send a start-up instruction only after receiving information that the helmet is worn safely; and/or send a power-off instruction only after receiving information that the helmet is returned safely.

In summary, this specification presents a smart helmet system, a helmet, and a transportation vehicle. The connection state between the first lock part and the second lock part is detected by the first detection module. The wearing state of the helmet is detected by the second detection module, and the engagement state of the helmet buckle is detected by the third detection module, so as to ensure that the rider wears the helmet on the head correctly. It is conducive to ensuring that the rider is always protected in a process of riding the transportation vehicle.

### Brief Description of the Drawings

To describe the technical solutions in the embodiments of the present application more clearly, the accompanying drawings required for describing the embodiments are briefly described below. Apparently, the accompanying drawings in the following description show merely some embodiments of the present application, and a person of ordinary skill in the art may derive other drawings from these accompanying drawings without creative efforts.
FIG. 1 is a structural schematic diagram of a transportation vehicle provided according to some embodiments of the present application;
FIG. 2 is a structural schematic diagram of a helmet in a first perspective provided according to some embodiments of the present application;
FIG. 3 is a structural schematic diagram of a helmet in a second perspective provided according to some embodiments of the present application;
FIG. 4 is a structural schematic diagram of a helmet in a third perspective provided according to some embodiments of the present application; and
FIG. 5 is a structural schematic diagram of a helmet buckle provided according to some embodiments of the present application.

### Detailed Description of Embodiments

The following description provides specific application scenarios and requirements of this specification, with the purpose of enabling those skilled in the art to make and use the content in this specification. For those skilled in the art, various partial modifications to the disclosed embodiments are obvious, and without departing from the spirit and scope of this specification, the general principles defined herein can be applied to other embodiments and application. Therefore, the specification is not limited to the embodiments, but is the consistent with the broadest scope of claims.

The terms used herein are merely intended to describe specific examples or embodiments, rather than to limit the present application. For example, unless expressly stated otherwise, the singular forms "a", "an" and "this" used herein may also include plural forms. In the present application, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In the present application, "X includes at least one of A, B, or C" means X includes at least A, X includes at least B, or X includes at least C. In other words, X may include only any combination of A, B, and C, or include any combination of A, B, and C and other possible content/element. The any combination of A, B, and C may be A, B, C, AB, AC, BC, or ABC.

In the present application, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. In another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

In consideration of the following description, in the present application, these and other features, the operations and functions of related elements of the structure, as well as the economic efficiency of the combination and manufacturing of components can be significantly improved. The description also includes figures and texts with reference to the figures in this specification, all of which form part of this specification. However, it should be clearly understood that the drawings are merely intended for illustration and description purposes, rather than to limit the scope of the present application. It should be understood that the accompanying drawings are not drawn to scale.

A transportation vehicle may be a short-distance transportation vehicle, which may refer to various devices and tools for meeting individuals' transportation demands within a relatively short distance range. Such devices typically have portability, maneuverability, and environmental friendliness, are suitable for short distance traveling in cities or specific areas, and can effectively replace or supplement traditional vehicles, thereby reducing traffic congestion and the environmental pollution. Specific examples of personal traveling devices include scooters (manual scooters and electric scooters), bicycles (manual bicycles and electric bicycles), self-balanced vehicles, and other similar light vehicles. The present application describes the above-mentioned short-distance transportation vehicle by taking a scooter as an example. However, it will be understood by those skilled in the art that other types of short-distance transportation vehicles are also applicable to the invention of the present application without departing from the spirit thereof.

The use scenarios of the transportation vehicle provided herein may be generally divided into two major categories: shared use and private use. The private use may refer to that the transportation vehicle is bought and owned personally by a rider only for use by the rider or the family thereof. The shared use may refer to a service provided by a third party for public use as needed. Riders can rent these transportation vehicles and, after use, park them in designated areas or at any public parking spot. The use scenarios of the transportation vehicles provided herein may be private transportation vehicles or shared transportation vehicles, which is not limited herein.

Generally, before starting to ride a transportation vehicle, a rider may remove a helmet from the transportation vehicle and wear it on the head, and tightly fasten a helmet buckle on retention straps so as to ensure the helmet can protect the head in a riding process. When the riding is finished, the rider may disengage the helmet buckle on the retention straps, take off the helmet and put it back to the original position for rapid and convenient use next time. Although wearing a helmet correctly is crucial for the safety of riding a transportation vehicle, there is lack of an effective supervision and inspection mechanism in practical operations to ensure that a rider follows correct wearing steps. This means that whether the rider wears the helmet correctly according to specified steps when using the transportation vehicle often relies on the consciousness and the safety awareness of the rider and cannot be monitored and verified effectively. This means that even with clear safety guidelines, it is impossible to ensure that every rider wears the helmet correctly, thereby compromising the helmet's protective effectiveness.

In view of this, this specification presents a smart helmet system, a helmet, and a transportation vehicle. A connection state of a helmet lock, a wearing state of the helmet, and an engagement state of a helmet buckle are monitored by a first detection module, a second detection module, and a third detection module, respectively. Whether the helmet is worn or returned correctly is determined by combining such information by a control module. This solution allows the correctness of wearing a helmet by a rider to be monitored, increasing the probability that a rider wears a helmet correctly, enhancing the safety of riding, and ensuring that the helmet is stored properly after use. Thus, an overall safe management level is improved.

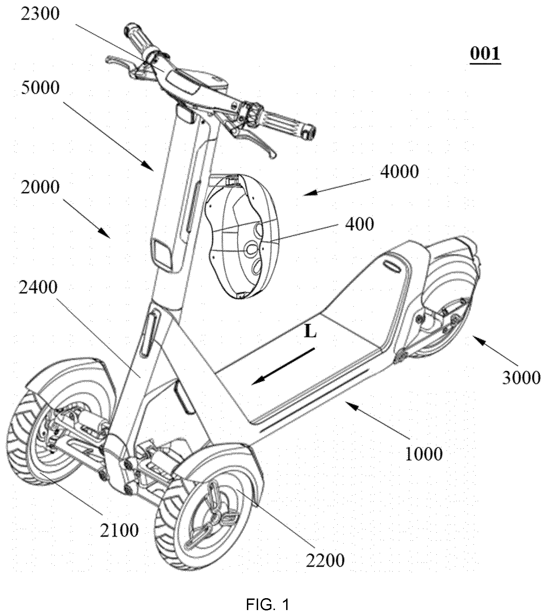

FIG. 1 is a structural schematic diagram of a transportation vehicle 001 provided according to some embodiments of the present application. As shown in FIG. 1, the transportation vehicle 001 includes a vehicle frame 1000, a front wheel assembly 2000, a rear wheel assembly 3000, a smart helmet system 4000, and a central control system 5000.

The vehicle frame 1000 is a base and a main body structure of the transportation vehicle 001. The vehicle frame 1000 is used to connect various components of the transportation vehicle 001, such as the front wheel assembly 2000 and the rear wheel assembly 3000. The vehicle frame 1000 may be further configured to carry a rider. In different transportation vehicles 001, the vehicle frame 1000 may have different structures. For example, taking as an example that the transportation vehicle 001 is an electric scooter, the electric scooter may be a three-wheeled scooter or a two-wheeled scooter. The vehicle frames 1000 of the three-wheeled scooter or the two-wheeled scooter have different structures. FIG. 1 of this specification is described by taking as an example that the transportation vehicle 001 is the three-wheeled scooter. Those skilled in the art will understand that other structures of the vehicle frame 1000 also fall into the protection scope of the present application.

The front wheel assembly 2000 and the rear wheel assembly 3000 are rotatably connected with the vehicle frame 1000. At least one of the front wheel assembly 2000 or the rear wheel assembly 3000 is driven to cause the transportation vehicle 001 to move. The front wheel assembly 2000 and the rear wheel assembly 3000 may be distributed along a longitudinal direction L of the vehicle frame 1000. Specifically, the longitudinal direction can be the driving direction of the vehicle 001, where the front is the direction the vehicle faces when moving forward in the longitudinal direction, and the rear is the opposite direction. The front wheel assembly 2000 is positioned in front of the rear wheel assembly 3000 along the longitudinal direction.

In different transportation vehicles 001, the front wheel assembly 2000 and the rear wheel assembly 3000 may have different structures. In some embodiments, the front wheel assembly 2000 may include at least one front wheel, such as one front wheel or two front wheels. In some embodiments, the rear wheel assembly 3000 may include at least one rear wheel, such as one rear wheel or two rear wheels.

In the electric scooter shown in FIG. 1, the front wheel assembly 2000 includes a handle bar 2300, a fork 2400, and two front wheels, i.e., a first front wheel 2100 and a second front wheel 2200. The first front wheel 2100 and the second front wheel 2200 may be located on two sides of the vehicle frame 1000, respectively, so that the vehicle frame 1000 can stand without a kick stand. The fork 2400 is rotatably connected with the two front wheels and rotatably connected with the vehicle frame 1000.

In the electric scooter shown in FIG. 1, the rear wheel assembly 3000 includes one rear wheel. The rear wheel may be located on a central axis of the longitudinal direction of the transportation vehicle 001. The rear wheel is rotatably connected with the vehicle frame 1000.

The smart helmet system 4000 is disposed at least in part on the helmet. specifically, the smart helmet system 4000 may be fully disposed on the helmet, or may be disposed partly on the helmet and partly on the transportation vehicle 001. The smart helmet system 4000 may be configured to detect whether the helmet is worn safely and/or returned safely. Specifically, before the transportation vehicle 001 is started, the smart helmet system 4000 may detect a wearing state of the helmet to obtain information whether the helmet is worn safely. When riding is finished, the smart helmet system 4000 may detect a return state of the helmet to obtain information whether the helmet is returned safely. The smart helmet system 4000 may be in communication connection with the central control system 5000 and send the detected information whether the helmet is worn safely or the information whether the helmet is returned to the central control system 5000.

The central control system 5000 may be disposed on the vehicle frame 1000. The central control system 5000 may be in communication connection with the smart helmet system 4000 to receive the information detected by the smart helmet system 4000 and instruct the transportation vehicle 001 to start or power off. Specifically, the central control system 5000 can send a start-up instruction only after receiving the information that the helmet is worn safely to instruct the transportation vehicle 001 to start. The central control system 5000 can send a power-off instruction only after receiving the information that the helmet is returned safely to instruct the transportation vehicle 001 to power off.

The central control system 5000 may include: a microcontroller, a central processing unit (CPU), a field-programmable gate array (FPGA), a digital signal processor (DSP), an application-specific integrated circuit (ASIC), a microprocessor, an embedded system controller, a programmable logic controller (PLC), an intelligent controller, a remote central control system 5000, and a multi-core processor. That is, the central control system 5000 is any circuit or processor capable of performing one or more functions, or any combination thereof.

As shown in FIG. 1, the smart helmet system 4000 includes a helmet 400 and a control module (not shown).

The control module may be a central control 5000 or a circuit independent of the central control 5000.

The helmet 400 is designed to be worn on the head of a rider to protect the safety of the rider. Each transportation vehicle 001 may be equipped with one or more helmets 400. For example, in a scenario of shared vehicles, a company of shared vehicles places a plurality of transportation vehicles and a plurality of helmets outdoors for use by users. In order to make the entire sharing system more flexible and convenient, a plurality of helmets 400 of the company can be combined into a set, and the plurality of helmets 400 in the same set can be adapted to a plurality of transportation vehicles 001 of the company. In other words, the plurality of helmets can be interchangeably used with a plurality of transportation vehicles. After use, riders can return the helmet 400 to any vehicle 001 from the same company as the helmet 400, without being limited to the specific vehicle 001 that was originally used.

For example, rider A and rider B use transportation vehicle A 001 and transportation vehicle B 001. The transportation vehicle A 001 is originally equipped with helmet A 400, and the transportation vehicle B is originally equipped with helmet B 400. The transportation vehicle A 001 and the transportation vehicle B 001 are transportation vehicles 001 belonging to the same company, and the helmet A 400 and the helmet B 400 are helmets 400 belonging to the same company. In a wearing process, the rider A and the rider B wear the helmets 400 interchangeably. That is, the rider A uses the transportation vehicle A 001 and the helmet B 400, and the rider B uses the transportation vehicle B 001 and the helmet A 400. When the helmets 400 are returned, the rider A may return the helmet B 400 to the transportation vehicle A 001 and the rider B may return the helmet A 400 to the transportation vehicle B 001, thereby completing the return of the helmets 400.

Moreover, in order to simultaneously guarantee the safety of the whole sharing system (the helmets will not be stolen) and ensure that each user can use a helmet having reliable quality, a plurality of helmets 400 in the set may also be specially customized for the transportation vehicles 001 of this company so that only these customized helmets can be identified by the plurality of vehicles 001. This helps prevent users from returning helmets from other brands or companies as a substitute after using the transportation vehicle 001.

The control module may be in communication connection with the helmet 400 to receive information detected by the helmet 400 and determine the wearing or return state of the helmet 400. The control module may be disposed on the helmet 400, or may be disposed on the transportation vehicle 001. This specification does not impose a limitation on the position where the control module is disposed. The control module may include: a microcontroller, a central processing unit (CPU), a field-programmable gate array (FPGA), a digital signal processor (DSP), an application-specific integrated circuit (ASIC), a microprocessor, an embedded system controller, a programmable logic controller (PLC), an intelligent controller, a remote control module, and a multi-core processor. That is, the control module is any circuit or processor capable of performing one or more functions, or any combination thereof.

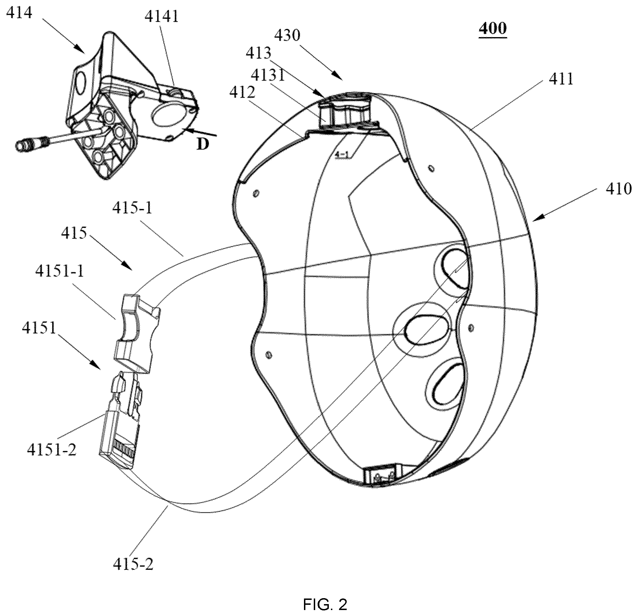

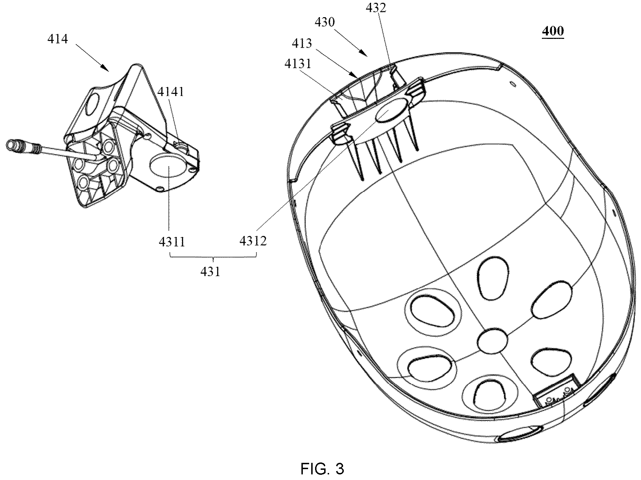

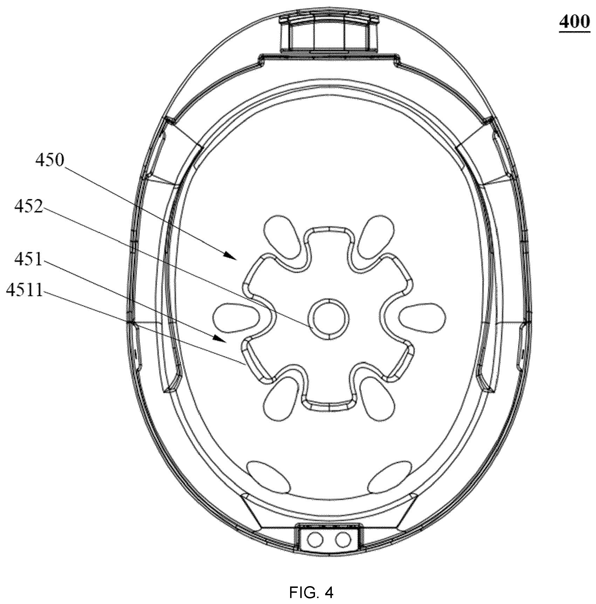

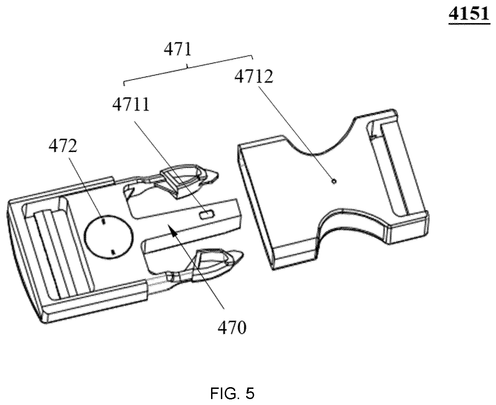

FIG. 2 is a structural schematic diagram of a helmet 400 in a first perspective provided according to some embodiments of the present application; FIG. 3 is a structural schematic diagram of a helmet 400 in a second perspective provided according to some embodiments of the present application; FIG. 4 is a structural schematic diagram of a helmet 400 in a third perspective provided according to some embodiments of the present application; and FIG. 5 is a structural schematic diagram of a helmet buckle provided according to some embodiments of the present application. As shown in FIG. 2, FIG. 3, FIG. 4, and FIG. 5, the helmet 400 includes a body 410, a first detection module 430, a second detection module 450, and a third detection module 470.

As shown in FIG. 2, the body 410 of the helmet is a mounting base for other components of the helmet 400. For example, the first detection module 430, the second detection module 450, and the third detection module 470 can be mounted with the helmet 400 as a carrier. The body 410 may include a housing 411 and a liner 412. When a collision occurs, the housing 411 can absorb and disperse an external impact to prevent a direct impact on the head. The liner 412 can further absorb impact energy to reduce the energy transferred to the head, and can also help buffer and disperse the remaining impact. The housing 411 may be made of a sturdy material, such as polycarbonate, acrylonitrile-butadiene-styrene (ABS) plastics, or a composite material. The liner 412 may be made of a light and energy-absorbing material, such as expanded polystyrene (EPS) foam or other energy-absorbing materials. The body 410 can be a semi-enclosed hemispherical structure or any other ergonomic shape, which is not limited herein.

The helmet 400 is connected with the vehicle 001 by a helmet lock. According to an embodiment of the present application, the helmet lock may include two parts: a first lock part 413 and a second lock part 414. The second lock part 414 is disposed on the vehicle 001. The second lock part 414 may be disposed at any position on the transportation vehicle 001, e.g., on the vehicle frame 1000, on the handle bar, on the fork, or the like. This specification does not impose a limitation on the position where the second lock part 414 is disposed. The first lock part 413 is disposed on the body 410. The first lock part 413 may be disposed at any position of the body 410. For example, the first lock part 413 may be disposed on the top of the housing 411 and on a side away from the head of the rider. The first lock part 413 may also be disposed on the bottom of the housing 411 and on the side away from the head of the rider. In another example, as shown in FIG. 2, the first lock part 413 may be disposed between the housing 411 and the liner 412 and located at the bottom of the body 410. This specification does not impose a limitation on the position of the first lock part 413.

The first lock part 413 may be engaged with and disengaged from the second lock part 414. By engaging and disengaging the first lock part 413 with and from the second lock part 414, the rider can take the helmet 400 from the transportation vehicle 001 or place the helmet 400 on the transportation vehicle 001.

The first lock part 413 includes a clamping slot 4131, and the second lock part 414 includes a spring clamping point 4141. The clamping slot 4131 is adapted to the spring clamping point 4141. The adaptation may be that the shapes and sizes of the matching surfaces of the spring locking point 4141 and the locking slot 4131 are matched. When the helmet 400 is connected with the transportation vehicle 001, the first lock part 413 slides to the second lock part 414 along a sliding direction D until the spring clamping point 4141 is clamped into the clamping slot 4131 to realize engagement between the first lock part 413 and the second lock part 414, thus realizing reliable connection between the helmet 400 and the transportation vehicle 001.

The body 410 may include retention straps 415. The retention straps 415 are disposed on the bottom of the body 410 and configured to connect two sides of the helmet 400. In particular, the retention straps 415 may include a first retention strap 415-1 and a second retention strap 415-2. One end of the first retention strap 415-1 may be fixedly disposed on one side of the body 410. The second retention strap 415-2 is disposed opposite to the first retention strap 415-1, and one end of the second retention strap 415-2 may be fixedly disposed on the other side of the body 410. When the rider wears the helmet 400 on the head, the first retention strap 415-1 is located below one side of the chin of the rider, and the second retention strap 415-2 is located below the other side of the chin of the rider.

In order to fix the first retention strap 415-1 and the second retention strap 415-2 together, the retention straps 415 further include a helmet buckle 4151. The helmet buckle 4151 may be configured to connect the other end of the first retention strap 415-1 with the other end of the second retention strap 415-2 such that the retention straps 415 are tightly fixed below the chin of the rider.

According to some embodiments of the present application, the helmet buckle 4151 includes a first buckle part 4151-1 and a second buckle part 4151-2. A first hole is formed in the first buckle part 4151-1, and the other end of the first retention strap 415-1 can pass through the first hole and be fixedly connected with the first buckle part 4151-1. A second hole is formed in the second buckle part 4151-2, and the other end of the second retention strap 415-2 can pass through the second hole and be fixedly connected with the second buckle part 4151-2. The first buckle part 4151-1 and the second buckle part 4151-2 are engageable such that the first retention strap 415-1 and the second retention strap 415-2 are connected together, causing the retention straps 415 to be tightly fixed below the chin of the rider.

In an initial state, the helmet 400 and the transportation vehicle 001 are connected by the first lock part 413 and the second lock part 414 of the helmet lock. When the rider is ready for riding, the helmet 400 needs to be removed from the transportation vehicle 001 firstly, and then the helmet 400 is worn on the head; and finally, the helmet buckle 4151 on the retention straps 415 is fastened.

In order to detect whether the first lock part 413 is connected with the second lock part 414, the helmet 400 is further provided with a first detection module 430. The first detection module 430 may be disposed at least in part on the first lock part 413, or may be disposed at least in part on the second lock part 414. In particular, the first detection module 430 may be fully disposed on the first lock part 413, or fully disposed on the second lock part 414. Alternatively, the first detection module 430 may be disposed partly on the first lock part 413 and partly on the second lock part 414. The first detection module 430 can detect, when working, a connection state between the first lock part 413 and the second lock part 414. The first detection module 430 may be in communication connection with the control module to send the detected information of the connection state to the control module.

As shown in FIG. 3, the first detection module 430 may include a first sensor 431 and a first communication unit 432. The first sensor 431 may be located on the first lock part 413 and the second lock part 414. In operation, the first sensor 431 can sense whether the first lock part 413 is engaged with the second lock part 414. For example, when the first sensor 431 detects a specific proximity, contact pressure, or signal transmission, it determines that the first lock part 413 and the second lock part 414 are engaged.. There may be a plurality of detection ways of the first sensor 431, such as a capacitive sensor, an infrared sensor, a reader, a photoelectric sensor, a pressure sensor, a proximity sensor, and a Hall Effect sensor. This specification does not impose a limitation on the type of the first sensor 431. Those skilled in the art should understand that any first sensor 431 capable of achieving the above technical solutions falls within the protection scope of this specification. For ease of description, the following description is made by taking as an example that the first sensor 431 performs detection by using a reader.

The first sensor 431 includes a target tag 4312 and a reader 4311. The target tag 4312 may be disposed on one of the first lock part 413 and the second lock part 414, and the reader 4311 may be located on the other one of the first lock part 413 and the second lock part 414. In particular, when the target tag 4312 is disposed on the first lock part 413, the reader 4311 is disposed on the second lock part 414. When the target tag 4312 is disposed on the second lock part 414, the reader 4311 is disposed on the first lock part 413. The reader 4311 can identify the target tag 4312 to sense whether the first lock part 413 is engaged with the second lock part 414. There may be a plurality of types of the target tag 4312 and the reader 4311. For example, the target tag 4312 may be a radio frequency identification (RFID) target tag 4312, and the reader 4311 may be an RFID reader 4311. In some embodiments, the RFID reader 4311 emits a signal to activate the RFID target tag 4312, and the RFID target tag 4312 reflects the signal. The RFID reader 4311 receives the signal reflected back by the RFID target tag 4312. Thus, the first sensor 431 senses that the first lock part 413 is engaged with the second lock part 414, and at this point, the information of the connection state is the helmet 400 being locked. In some embodiments, the RFID reader 4311 emits a signal, but does not receive the signal reflected by the RFID target tag 4312. Thus, the first sensor 431 senses that the first lock part 413 is disengaged from the second lock part 414, and in this case, the information of the connection state is the helmet 400 being unlocked.

The reader 4311 can read only one corresponding target tag 4312. Since the reader 4311 and the tag 4312 are located on the first lock part 413 and the second lock part 414, respectively, the transportation vehicle 001 forms a one-to-one corresponding matching relationship with the helmet 400.

The reader 4311 may also read a plurality of tags of the same type with the target tag 4312. For example, the target tag 4312 may include a plurality of tags customized for the reader 4311 (e.g., the reader 4311 can only read tags specified by the company to which the transportation vehicle 001 belongs). These tags form a tag set. The target tag 4312 is one tag in the tag set. In this way, the reader 4311 can read any tag in the set, but cannot read other tags beyond the set. Thus, since the reader 4311 and the tag 4312 are located on the first lock part 413 and the second lock part 414, respectively, the transportation vehicle 001 can match all helmets 400 with the tags in the set, and cannot match the helmets with other tags beyond the set. For example, in the scenario of shared vehicles, the transportation vehicle 001 can only identify the helmets 400 from the same brand company and cannot identify the helmets from other companies. In this way, after use, the rider can return the helmet 400 to any transportation vehicle 001 belonging to the same company with the helmet 400, and is not limited to the originally used specific transportation vehicle 001. Thus, the use efficiency of the helmet 400 is improved such that the whole sharing system is more flexible and convenient.

The first sensor 431 may be in communication connection with the first communication unit 432 so that the information of the connection state detected by the first sensor 431 can be transmitted to the first communication unit 432. The communication connection may be a wired communication connection, or may be a wireless communication connection, which is not limited herein. Further, the first communication unit 432 may be in communication connection with the control module by a meter-scale wireless data transmission technology such that the first communication unit 432 sends the received information of the connection state to the control module. The meter-scale wireless data transmission technology is a wireless transmission technology with an effective wireless communication distance between several millimeters and 10 meters, such as near field communication, Bluetooth, infrared data association (IrDA), and magnetic induction communication.

The first communication unit 432 may send the information of the connection state to the control module in different ways. For example, in some embodiments, when the first lock part 413 is engaged with the second lock part 414, the first communication unit 432 can send a helmet-locked signal to the control module; and when the first lock part 413 is disengaged from the second lock part 414, the first communication unit 432 can send a helmet-unlocked signal to the control module. In another example, the first communication unit 432 can send a null signal as the helmet-locked signal when the first lock part 413 is engaged with the second lock part 414; and when the first lock part 413 is disengaged from the second lock part 414, the first communication unit 432 can send the helmet-unlocked signal. In another example, the first communication unit 432 can also send a locked signal when the first lock part 413 is engaged with the second lock part 414; and when the first lock part 413 is disengaged from the second lock part 414, the first communication unit 432 can send a null signal as the helmet-unlocked signal.

After the rider remove the helmet 400 from the transportation vehicle 001, the helmet 400 needs to be worn on the head. In order to detect the wearing state of the helmet 400, the helmet 400 may further include a second detection module 450. The second detection module 450 may be disposed on an inner side of the body 410. Specifically, the second detection module 450 may be disposed on the liner 412 and located on a side of the top of the liner 412 close to the top of the head of the rider. When the rider wears the helmet 400 on the head, the second detection module 450 is located on the top of the head of the rider. The second detection module 450 can detect whether the rider wears the helmet 400 on the head. The second detection module 450 may also be in communication connection with the control module to send the information of the wearing state to the control module.

As shown in FIG. 4, the second detection module 450 includes a second sensor 451 and a second communication unit 452. In operation, the second sensor 451 can sense whether the helmet is worn on the head of the rider. For example, when the second sensor 451 detects a specific proximity, contact pressure, or signal transmission, the second sensor 451 regards the helmet as being worn on the head of the rider. There may be a plurality of detection ways of the second sensor 451, such as a capacitive sensor, an infrared sensor, a reader, a photoelectric sensor, a pressure sensor, a proximity sensor, and a Hall Effect sensor. This specification does not impose a limitation on the type of the second sensor 451. Those skilled in the art should understand that any second sensor 451 capable of achieving the above technical solutions falls within the protection scope of this specification. For ease of description, the following description is made by taking as an example that the second sensor 451 performs detection by using a pressure sensor 4511.

The pressure sensor 4511 is mounted on a portion of the inner side of the body 410 that is in contact with the top of the head of the rider. In particular, the pressure sensor 4511 may be disposed on the liner 412 and located on a side of the top of the liner 412 facing the head of the rider. When the rider wears the helmet 400 on the head, the pressure sensor 4511 is located on the top of the head of the rider and in contact with the top of the head of the rider. When working, the pressure sensor 4511 can detect a pressure exerted on the inner side of the helmet 400 when the rider wears the helmet 400 on the head.

The type of the pressure sensor 4511 may be a pressure sensor 4511 for directly measuring a pressure change, or may be a pressure sensor 4511 for indirectly measuring a pressure. The pressure sensor 4511 for directly measuring a pressure change may be a piezoresistive pressure sensor 4511, a piezoelectric pressure sensor 4511, or an inductive pressure sensor 4511. The pressure sensor 4511 for indirectly measuring a pressure may be a one of a strain pressure sensor 4511, a capacitive pressure sensor 4511, an optic fiber pressure sensor 4511, a vibrational frequency pressure sensor 4511, a thermosensitive pressure sensor 4511, or a magnetostrictive pressure sensor 4511. This specification does not impose a limitation on the type of the pressure sensor 4511. Those skilled in the art should understand that any pressure sensor 4511 capable of achieving the above technical solutions falls within the protection scope of this specification.

The second sensor 4511 may be in communication connection with the second communication unit 452 so as to transmit the information of the wearing state detected by the pressure sensor 4511 to the second communication unit 452. The communication connection may be a wired communication connection, or may be a wireless communication connection, which is not limited herein. The second communication unit 452 may be in communication connection with the control module. Further, the second communication unit 452 may be in communication connection with the control module by the meter-scale wireless data transmission technology such that the second communication unit 452 sends the received information of the wearing state to the control module. The meter-scale wireless data transmission technology is as described above, which will not be repeated here.

The second communication unit 452 can send the information of the wearing state to the control module in different ways. For example, in some embodiments, when the pressure sensor 4511 detects that the pressure exerted on the inner side of the body 410 is greater than or equal to a preset pressure, the second communication unit 452 can send a helmet-taken-on signal; and when the pressure sensor 4511 detects that the pressure exerted on the inner side of the body 410 is less than the preset pressure, the communication unit 452 sends a helmet-taken-off signal. In another example, in some other examples, when the pressure sensor 4511 detects that the pressure exerted on the inner side is greater than or equal to the preset pressure, the second communication unit 452 can send a null signal as the helmet-worn signal; and when the pressure sensor 4511 detects that the pressure exerted on the inner side of the body 410 is less than the preset pressure, the second communication unit 452 can send the helmet-taken-off signal. In another example, in some other examples, when the pressure sensor 4511 detects that the pressure exerted on the inner side is greater than or equal to the preset pressure, the second communication unit 452 can send the helmet-worn signal; and when the pressure sensor 4511 detects that the pressure exerted on the inner side of the body 410 is less than the preset pressure, the second communication unit 452 can send the null signal as the helmet-taken-off signal.

After the rider wears the helmet 400 on the head, the helmet buckle 415 needs to be engaged, and the wearing of the helmet can be completed only after the helmet 400 is steadily fixed on the head. In order to detect whether the helmet buckle 4151 is engaged, the helmet 400 further includes a third detection module 470. The third detection module 470 may be disposed on the retention straps 415. Further, the third detection module 470 may be disposed on the helmet buckle 4151. In particular, the third detection module 470 may be disposed at least in part on the first buckle part 4151-1, or may be disposed at least in part on the second buckle part 4151-2. For example, the third detection module 470 may also be completely disposed on the first buckle part 4151-1, or completely disposed on the second buckle part 4151-2. In another example, the third detection module 470 may be disposed partly on the first buckle part 4151-1 and partly on the second buckle part 4151-2. In operation, the third detection module 470 detects an engagement state of the helmet buckle 4151. The third detection module 470 may be in communication connection with the control module to send the detected information of the engagement state of the helmet buckle 4151 to the control module.

As shown in FIG. 5, the third detection module 470 includes a third sensor 471 and a third communication unit 472. The third sensor 471 may be disposed at least in part on the first buckle part 4151-1, or may be disposed at least in part on the second buckle part 4151-2. Further, the third sensor 471 may be disposed partly on the first buckle part 4151-1 and partly on the second buckle part 4151-2. The third sensor 471 may also be completely disposed on the first buckle part 4151-1, or completely disposed on the second buckle part 4151-2. The type of the third sensor 471 may be one of a magnetic induction sensor, a proximity sensor, a Hall Effect sensor, an optical sensor, a displacement sensor, a pressure sensor, or a vibration sensor. This specification does not impose a limitation on the type of the third sensor 471. Those skilled in the art should understand that any third sensor 471 capable of achieving the above technical solutions falls within the protection scope of this specification.

For ease of description, the following description is made by taking as an example that the third sensor 471 is disposed partly on the first buckle part 4151-1 and partly on the second buckle part 4151-2.

The third sensor 471 may include a signal unit 4711 and a sensing unit 4712. The signal unit 4711 is located on the first buckle part 4151-1 and on a side of the first buckle part 4151-1; and the sensing unit 4712 is located on the second buckle part 4151-2 and on a side of the second buckle part 4151-2.

When the first buckle part 4151-1 is engaged with the second buckle part 4151-2, the signal unit 4711 enters a sensing region of the sensing unit 4712, and the signal unit 4711 is sensed by the sensing unit 4712 such that the third sensor 471 senses that the helmet buckle 4151 is engaged. When the first buckle part 4151-1 is disengaged from the second buckle part 4151-2, the signal unit 4711 is located outside the sensing region of the sensing unit 4712, and the sensing unit 4712 cannot sense the signal unit 4711. Therefore, the third sensor 471 senses that the helmet buckle 4151 is disengaged, i.e., the helmet buckle 4151 is unlocked. According to some embodiments of the present application, the side of the first buckle part 4151-1 on which the signal unit 4711 is disposed is opposite to the side of the second buckle part 4151-2 on which the sensing unit is disposed so that the signal unit 4711 can be sensed by the sensing unit 4712 when the helmet buckle 4151 is engaged.

The third sensor 471 may be in communication connection with the third communication unit 472 so as to transmit the information of the engagement state of the helmet buckle 4151 detected by the third sensor 471 to the third communication unit 472, The communication connection may be a wired communication connection, or may be a wireless communication connection, which is not limited herein. The third communication unit 472 may be in communication connection with the control module. Further, the third communication unit 472 may be in communication connection with the control module by the meter-scale wireless data transmission technology such that the third communication unit 472 sends the received information of the engagement state of the helmet buckle 4151 to the control module.

The third sensor 471 is a hall sensor for example. When the third sensor 471 is the hall sensor, the signal unit 4711 may be a magnet, and the sensing unit 4712 may be a magnetic induction element. When the helmet buckle 4151 is disengaged, there is a large distance between the first buckle part 4151-1 and the second buckle part 4151-2, and the magnetic induction element detects no obvious magnetic field change, and the third sensor 471 senses that the helmet buckle 4151 is disengaged. In this case, the information of the engagement state of the helmet buckle 4151 is the helmet-buckle-disengaged signal. When the helmet buckle 4151 is engaged, there is a small distance between the first buckle part 4151-1 and the second buckle part 4151-2; the magnet is close to the magnetic induction element and the magnetic induction element senses a strong magnetic field, and the third sensor 471 senses that the helmet buckle 4151 is engaged. In this case, the information of the engagement state of the helmet buckle 4151 is the helmet-buckle-engaged signal. The magnetic induction element is in communication connection with the third communication unit 472 to send the helmet-buckle-disengaged signal or the helmet-buckle-engaged signal to the third communication unit 472.

The third communication unit 472 can send the information of the engagement state to the control module in different ways. For example, in some embodiments, when the sensing unit 4712 detects that the signal unit 4711 enters the sensing region, the third communication unit 472 sends the helmet-buckle-engaged signal; and when the sensing unit 4712 does not detect that the signal unit 4711 enters the sensing region, the third communication unit 472 sends the helmet-buckle-disengaged signal. In another example, when the sensing unit 4712 detects that the signal unit 4711 enters the sensing region, the third communication unit 472 sends a null signal as the helmet-buckle-engaged signal; and when the sensing unit 4712 does not detect that the signal unit 4711 enters the sensing region, the third communication unit 472 sends the helmet-buckle-disengaged signal. In another example, when the sensing unit 4712 detects that the signal unit 4711 enters the sensing region, the third communication unit 472 sends the helmet-buckle-engaged signal; and when the sensing unit 4712 does not detect that the signal unit 4711 enters the sensing region, the third communication unit 472 sends a null signal as the helmet-buckle-disengaged signal.

After the control module receives the information of the connection state of the first lock part 413 and the second lock part 414, the wearing information of the helmet 400, and the information of the engagement state of the helmet buckle 4151, the wearing or return state of the helmet 400 can be determined based on the information of these states. In particular, after the control module receives the helmet-unlocked signal, the helmet-worn signal, and the helmet-buckle-engaged signal, it is determined that the helmet 400 is worn safely. After the control module receives the helmet-locked signal, the helmet-taken-off signal, and the helmet-buckle-disengaged signal, it is determined that the helmet 400 is returned safely.

In some embodiments, when determining whether the helmet 400 is worn safely, the control module does not determine the order of the received helmet-unlocked signal, the helmet-worn signal, and the helmet-buckle-engaged signal. In some other embodiments, there is a sequential order between signals for determining that the helmet 400 is worn safely. The control module can determine that the helmet 400 is worn safely after sequentially receiving the helmet-unlocked signal, the helmet-worn signal, and the helmet-buckle-engaged signal.

Based on the same mechanism, in some embodiments, when determining that the helmet 400 is returned safely, the control module does not determine the order of the received helmet-locked signal, the helmet-taken-off signal, and the helmet-buckle-disengaged signal. In some other embodiments, there is a sequential order between signals for determining that the helmet 400 is returned safely. The control module can determine that the helmet 400 is returned safely after sequentially receiving the helmet-buckle-disengaged signal, the helmet-taken-off signal, and the helmet-locked signal.

After the control module determines that the helmet 400 is worn or returned safely, corresponding information is sent to the transportation vehicle 001, and the transportation vehicle 001 sends a corresponding instruction according to the information. Further, after the control module determines that the helmet 400 is worn or returned safely, corresponding information is sent to the central control system 5000 of the transportation vehicle 001, and the central control system 5000 sends a corresponding instruction according to the information. In particular, after the control module determines that the helmet 400 is worn safely, the information that the helmet 400 is worn safely is sent to the central control system 5000. The central control system 5000 sends a start-up instruction only after receiving the information that the helmet 400 is worn safely, and then the rider can start the transportation vehicle 001. After the control module determines that the helmet 400 is returned safely, the information that the helmet 400 is returned safely is sent to the central control system 5000. The central control system 5000 sends a power-off instruction only after receiving the information that the helmet 400 is returned safely so that the rider can power off the transportation vehicle 001. It can be appreciated that the start-up instruction can be powering on, unlocking, or a combination of both. The power-off instruction may be powering off, locking, or a combination of both.

In summary, this specification presents a smart helmet system 4000, a helmet 400, and a transportation vehicle 001. The connection state between the first lock part 413 and the second lock part 414 is detected by the first detection module 430. The wearing state of the helmet 400 is detected by the second detection module 450, and the engagement state of the helmet buckle 4151 is detected by the third detection module 470, so as to ensure that the rider wears the helmet 400 on the head correctly. It is conducive to ensuring that the rider is always protected in a process of riding the transportation vehicle 001.

The foregoing describes the specific embodiments of the present application. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed application, those skilled in the art can understand that the foregoing detailed application may be presented by way of example only, and may not be limited. Although there is no clear description, those skilled in the art can understand that the present application intends to cover various reasonable changes, improvements, and modifications of the embodiments. These changes, improvements, and modifications are intended to be proposed in the present application and are within the spirit and scope of the exemplary embodiments of the present application.

In addition, some specific terms in the present application have been used to describe the embodiments of the present application. For example, "one embodiment", "an embodiment", and/or "some embodiments" mean that a specific feature, structure, or characteristic described in combination with the embodiment may be included in at least one embodiment of the present application. Therefore, it can be emphasized and should be understood that two or more references to "an embodiment" or "one embodiment" or "an alternative embodiment" in various parts of the present application do not necessarily all refer to the same embodiment. In addition, specific feature, structure, or characteristic may be appropriately combined in one or more embodiments of the present application.

It should be understood that in the foregoing description of the embodiments of the present application, to help understand a feature, and for the purpose of simplifying the present application, the present application sometimes combines various features in a single embodiment, a drawing, or description thereof. However, this does not mean that the combination of these features is necessary. It is entirely possible for those skilled in the art to extract some of the features as a single embodiment for understanding when reading the present application. In other words, the embodiments in the present application can also be understood as an integration of multiple sub-embodiments. **The** content of each sub-embodiment is also true when it is less than all the characteristics of a single previously disclosed embodiment.

Each patent, patent application, patent application publication, and other materials referenced in this disclosure, such as articles, books, specifications, publications, documents, literature, etc. (excluding any related historical examination documents), are incorporated by reference for all purposes relevant to this disclosure, including in the description and claims of this disclosure. However, in the event of any inconsistency or conflict between the descriptions, definitions, and/or terms used in these materials and those used in this disclosure, the terms used in this disclosure shall prevail.

Finally, it should be understood that the embodiment of the present application provided herein is an explanation of the principle of the embodiment of the present application. Other modified embodiments are also within the scope of the present application. Therefore, the embodiments disclosed in the present application are merely examples rather than limitations. Those skilled in the art can adopt alternative configurations according to the embodiments in the present application to implement the present application in the present application. Therefore, the embodiments of the present application are not limited to those explicitly described in the present application.

## Claims

1. A smart helmet system for detecting a wearing/return state of a helmet, **characterized in that** the system comprises:
a control module;
a helmet body including a first lock part of a helmet lock and retention straps, wherein the retention straps include a helmet buckle, and a second lock part of the helmet lock is mounted on a transportation vehicle;
a first detection module in communication connection with the control module and configured to detect, when working, a connection state between the first lock part and the second lock part and send information of the connection state to the control module;
a second detection module in communication connection with the control module and configured to detect a wearing state of the helmet and send information of the wearing state to the control module; and
a third detection module in communication connection with the control module and configured to detect an engagement state of the helmet buckle and send information of the engagement state to the control module,
wherein the control module is configured to determine the wearing/return state of the helmet based on the information of the connection state, the information of the wearing state, and the information of the engagement state.

2. The smart helmet system according to claim 1, **characterized in that** the first detection module includes a first sensor and a first communication unit, the first communication unit is in communication connection with the first sensor and in communication connection with the control module by a meter-scale wireless data transmission technology;
the first sensor is located on the first lock part or the second lock part and configured to sense, when working, whether the first lock part is engaged with the second lock part; and in order to send the information of the connection state to the control module, the first communication unit is configured to:
when the first lock part is engaged with the second lock part, send a helmet-locked signal; otherwise, send a helmet-unlocked signal; or
when the first lock part is engaged with the second lock part, send a null signal as the helmet-locked signal; otherwise, send the helmet-unlocked signal; or
when the first lock part is engaged with the second lock part, send the helmet-locked signal; otherwise, send a null signal as the helmet-unlocked signal.

3. The smart helmet system according to claim 2, **characterized in that** the first sensor includes:
a target tag located on one of the first lock part and the second lock part; and
a reader located on the other one of the first lock part and the second lock part and configured to identify the target tag to sense whether the first lock part is engaged with the second lock part.

4. The smart helmet system according to any one of claims 1 to 3, **characterized in that** the second detection module is located on an inner side of the helmet body and includes:
a pressure sensor configured to detect, when working, a pressure exerted on the inner side when a rider wears the helmet; and
a second communication unit in communication connection with the control module by the meter-scale wireless data transmission technology and in communication connection with the pressure sensor; and
in order to send the information of the wearing state to the control module, the second communication unit is configured to:
when the pressure sensor detects that the pressure exerted on the inner side is greater than or equal to a preset pressure, send a helmet-worn signal; otherwise, send a helmet-taken-off signal; or
when the pressure sensor detects that the pressure exerted on the inner side is greater than or equal to the preset pressure, send a null signal as the helmet-worn signal; otherwise, send the helmet-taken-off signal; or
when the pressure sensor detects that the pressure exerted on the inner side is greater than or equal to the preset pressure, send the helmet-worn signal; otherwise, send a null signal as the helmet-taken-off signal.

5. The smart helmet system according to any one of claims 1 to 4, **characterized in that**:
the helmet buckle includes a first buckle part and a second buckle part;
the third detection module includes:
a third sensor including a signal unit and a sensing unit, wherein the signal unit is located on the first buckle part and the sensing unit is located on the second buckle part; and when the signal unit enters a sensing region of the sensing unit, the signal unit is sensed by the sensing unit such that the third sensor senses that the helmet buckle is engaged; and
a third communication unit in communication connection with the control module by the meter-scale wireless data transmission technology and in communication connection with the third sensor; and
in order to send the information of the engagement state to the control module, the third communication unit is configured to:
when the sensing unit detects that the signal unit enters the sensing region, send a helmet-buckle-engaged signal; otherwise, send a helmet-buckle-disengaged signal; or
when the sensing unit detects that the signal unit enters the sensing region, send a null signal as the helmet-buckle-engaged signal; otherwise, send the helmet-buckle-disengaged signal; or
when the sensing unit detects that the signal unit enters the sensing region, send the helmet-buckle-engaged signal; otherwise, send a null signal as the helmet-buckle-disengaged signal.

6. The smart helmet system according to claim 5, **characterized in that** the third sensor is a hall sensor; the signal unit is a magnet; the sensing unit is a magnetic induction element; and the third communication unit is in communication connection with the magnetic induction element and configured to send, when working, the helmet-buckle-engaged signal and/or the helmet-buckle-disengaged signal.

7. The smart helmet system according to any one of claims 1 to 6, **characterized in that** the control module is located on the helmet and/or the transportation vehicle; and
in order to determine a safe wearing state of the helmet based on the information of the connection state, the information of the wearing state, and the information of the engagement state, the control module is configured to:
send target information that the helmet is worn safely to the transportation vehicle after receiving the helmet-unlocked signal, the helmet-worn signal, and the helmet-buckle-engaged signal.

8. The smart helmet system according to any one of claims 1 to 7, **characterized in that** the control module is located on the helmet and/or the transportation vehicle; and
in order to determine the return state of the helmet based on the information of the connection state, the information of the wearing state, and the information of the engagement state, the control module is configured to:
send information that the helmet is returned safely to the transportation vehicle after receiving the helmet-locked signal, the helmet-taken-off signal, and the helmet-buckle-disengaged signal.

9. A helmet, comprising:
a body including a first lock part of a helmet lock and retention straps, wherein the retention straps comprise a helmet buckle; and a second lock part of the helmet lock is mounted on a transportation vehicle;
a first detection module in communication connection with a control module and configured to detect, when working, a connection state between the first lock part and the second lock part and send information of the connection state to the control module;
a second detection module in communication connection with the control module and configured to detect a wearing state of the helmet and send information of the wearing state to the control module; and
a third detection module in communication connection with the control module and configured to detect an engagement state of the helmet buckle and send information of the engagement state to the control module,
wherein the control module is configured to determine a wearing/return state of the helmet based on the information of the connection state, the information of the wearing state, and the information of the engagement state.

10. The helmet according to claim 9, **characterized in that** the first detection module includes a first sensor and a first communication unit; the first communication unit is in communication connection with the control module by a meter-scale wireless data transmission technology and in communication connection with the first sensor;
the first sensor is located on the first lock part or the second lock part and configured to sense, when working, whether the first lock part is engaged with the second lock part; and in order to send the information of the connection state to the control module, the first communication unit is configured to:
when the first lock part is engaged with the second lock part, send a helmet-locked signal; otherwise, send a helmet-unlocked signal; or
when the first lock part is engaged with the second lock part, send a null signal as the helmet-locked signal; otherwise, send the helmet-unlocked signal; or
when the first lock part is engaged with the second lock part, send the helmet-locked signal; otherwise, send a null signal as the helmet-unlocked signal.

11. The helmet according to claim 9, **characterized in that** the second detection module is located on an inner side of the body and includes:
a pressure sensor configured to detect, when working, a pressure exerted on the inner side when a rider wears the helmet; and
a second communication unit in communication connection with the control module by the meter-scale wireless data transmission technology and in communication connection with the pressure sensor; and
in order to send the information of the wearing state to the control module, the second communication unit is configured to:
when the pressure sensor detects that the pressure exerted on the inner side is greater than or equal to a preset pressure, send a helmet-worn signal; otherwise, send a helmet-taken-off signal; or
when the pressure sensor detects that the pressure exerted on the inner side is greater than or equal to the preset pressure, send a null signal as the helmet-worn signal; otherwise, send the helmet-taken-off signal; or
when the pressure sensor detects that the pressure exerted on the inner side is greater than or equal to the preset pressure, send the helmet-worn signal; otherwise, send a null signal as the helmet-taken-off signal.

12. The helmet according to claim 9, **characterized in that**:
the helmet buckle includes a first buckle part and a second buckle part;
the third detection module includes:
a third sensor including a signal unit and a sensing unit, wherein the signal unit is located on the first buckle part and the sensing unit is located on the second buckle part; and when the signal unit enters a sensing region of the sensing unit, the signal unit is sensed by the sensing unit such that the third sensor senses that the helmet buckle is engaged; and
a third communication unit in communication connection with the control module by the meter-scale wireless data transmission technology and in communication connection with the third sensor; and
in order to send the information of the engagement state to the control module, the third communication unit is configured to:
when the sensing unit detects that the signal unit enters the sensing region, send a helmet-buckle-engaged signal; otherwise, send a helmet-buckle-disengaged signal; or
when the sensing unit detects that the signal unit enters the sensing region, send a null signal as the helmet-buckle-engaged signal; otherwise, send the helmet-buckle-disengaged signal; or
when the sensing unit detects that the signal unit enters the sensing region, send the helmet-buckle-engaged signal; otherwise, send a null signal as the helmet-buckle-disengaged signal.

13. A transportation vehicle, comprising:
a vehicle frame;
a front wheel assembly rotatably connected with the vehicle frame;
a rear wheel assembly rotatably connected with the vehicle frame;
a smart helmet system including the smart helmet system according to claims 1 to 12; and
a central control system mounted on the vehicle frame and in communication connection with the smart helmet system.

14. The transportation vehicle according to claim 13, **characterized in that**:
the rear wheel assembly includes at least one rear wheel; and
the front wheel assembly includes:
a handle bar,
a fork pivotally connected with the handle bar, and
at least one front wheel rotatably connected with the fork.

15. The transportation vehicle according to claim 13, **characterized in that** the central control system is configured to:
send a start-up instruction only after receiving information that the helmet is worn safely; and/or
send a power-off instruction only after receiving information that the helmet is returned safely.
